# EUROPÄISCHE PATENTSCHRIFT

(11) **EP 2 402 189 B1**
(45) Veröffentlichungstag und Bekanntmachung des Hinweises auf die Patenterteilung: **05.09.2018**
(21) Anmeldenummer: 11004578.8
(22) Anmeldetag: 06.06.2011
(51) Int. Cl.: B60J 7/185, B60J 7/19, B60J 7/10, B62D 25/04, B60J 1/00

(54) **Klemmvorrichtung zur Befestigung eines Anbauteils an einem Profilrohr eines Fahrerschutzdaches**
Clamp device for attaching an extension to a section tube of a driver protection roof
Dispositif de serrage pour la fixation d'un élément de montage sur un tuyau profilé d'un arceau de sécurité

(30) Priorität: 30.06.2010 DE 102010025595
(43) Veröffentlichungstag der Anmeldung: 04.01.2012
(73) Patentinhaber: STILL GmbH, 22113 Hamburg (DE)
(72) Erfinder: Schulz, Matthias, 19288 Neu-Krenzlin (DE)
(74) Vertreter: Patentship Patentanwaltsgesellschaft mbH

(56) Entgegenhaltungen:
- EP-A1- 0 008 592
- EP-A1- 0 021 226
- EP-A2- 0 004 459
- EP-A2- 1 927 493
- GB-A- 308 042
- JP-A- H10 291 485
- US-A- 6 148 488

## Beschreibung

Die Erfindung betrifft eine Klemmvorrichtung an einem Profilrohr eines Fahrerschutzdaches eines Fahrzeugs zur Befestigung eines Anbauteils, insbesondere eines von einer Scheibe oder einer Verdeckplane gebildeten Verkleidungsteils, wobei das Profilrohr einen Profilquerschnitt mit zwei konvexen, nach außen gekrümmten Umfangswänden und mit zwei nach Innen gewandten V-förmigen Hinterschneidungen aufweist, wobei eine erste V-förmige Hinterschneidung von zwei hinterschnittig an den Umfangswänden und nach Innen geneigten Profilwänden gebildet ist und eine zweite Hinterschneidung von zwei hinterschnittig an den Umfangswänden und nach Innen geneigten Profilwänden gebildet ist.

Zur Befestigung von Anbauteilen, beispielsweise Scheiben oder von Verdeckplanen gebildeten Verkleidungsteilen einer Kabinenverkleidung, an Profilrohren eines Fahrerschutzdaches ist es bekannt, die Scheibe bzw. die Verdeckplane mit Bohrungen bzw. Ösen zu versehen, um diese mittels Haltern und Schraubverbindungen an den Profilrohren zu befestigen.

Die Schraubverbindungen können von Bohrungen, bevorzugt Gewindebohrungen, in den Profilrohren gebildet werden, in denen Befestigungsschrauben eingeschraubt werden können, oder von Bolzen, bevorzugt Gewindebolzen, gebildet werden, die an den Profilrohren als Schweißbolzen angeschweißt sind und an denen entsprechende Befestigungsmuttern aufgeschraubt werden können.

An diesen Befestigungsarten ist nachteilig, dass durch die Bohrungen in der Scheibe bzw. durch die Ösen des Verkleidungsteils, bzw. die Bohrungen oder angeschweißten Bolzen an den Profilrohren vorbereitende Arbeiten erforderlich sind, die den Bauaufwand erhöhen. Zudem ist durch die Bohrungen bzw. Bolzen der Befestigungspunkt des Anbauteils fest vorgegeben und kann nachträglich nicht verändert werden.

Zudem werden bei Fahrerschutzdächern Varianten mit Scheibe und ohne Scheibe bzw. mit Verkleidungsteil und ohne Verkleidungsteil gebaut. Um jedoch eine Nachrüstbarkeit der Scheibe bzw. des Verkleidungsteils zu gewährleisten, müssen alle Fahrerschutzdächer mit den Gewindebohrungen bzw. Schweißbolzen an den Profilrohen versehen werden.

Ein weiterer Nachteil der bekannten Befestigungsarten besteht darin, dass sich durch die Bohrungen bzw. Schweißbolzen an den Profilrohren eine Schwächung der Profilrohre ergibt und somit die Belastbarkeit des Fahrerschutzdaches verringert wird.

Um den Aufwand für die Gewindebohrungen bzw. Schweißbolzen an den Profilrohren zu vermeiden und eine Schwächung der Profilrohre zu vermeiden, ist es bereits bekannt, Anbauteile, beispielsweise Scheinwerfer oder Außenspielegel, mittels einer mehrteiligen Klemmvorrichtungen an dem Profilrohr zu befestigen. Die Klemmvorrichtung ist hierbei mit Gewindebohrungen versehen, mittels denen das Anbauteil an der Klemmvorrichtung über Befestigungsschrauben befestigt werden kann. Eine derartige, mehrteilige Klemmvorrichtung mit zwei Klemmstücken, an denen eine Anbauteil mittels Befestigungsschrauben befestigt werden kann, ist aus der DE 202 20 363 U1 bekannt.

Die beiden Klemmstücke der DE 202 20 363 U1 werden mittels einer Klemmschraube gegeneinander verspannt und an dem Profilrohr befestigt. Das Verklemmen der beiden Klemmstücke erhöht den Montageaufwand der Klemmvorrichtung an dem Profilrohr. Durch die Befestigung des Anbauteils mittels Gewindebohrungen sind weiterhin Bohrungen an dem Anbauteil für die Befestigungsschrauben erforderlich. Hierdurch ist insbesondere bei einem als Scheibe oder Verdeckplane ausgebildeten Anbauteil nachteilig, dass weiterhin aufwändige Bohrungen in der Scheibe bzw. Ösen in der Verdeckplane erforderlich sind und bei der Befestigung der Scheibe die Lage der von den beiden Klemmstücken gebildeten Klemmvorrichtungen an den Profilrohren durch die Bohrungen in der Scheibe festgelegt sind.

Die JP H10-291485 offenbart eine gattungsgemäße Klemmvorrichtung, mit der das Kabinendach an einem Profilrohr einer Fahrerkabine einer Arbeitsmaschine über einen am Kabinendach angeschraubten Halter, der von einem Winkel gebildet ist, befestigt ist.

Die EP 0 004 459 A2 offenbart eine Befestigung eines Panels an einem Profil. Das Profil hat eine Anlagefläche, an der das Panel anliegt. Eine Klemme, die an einer Lippe des Profils aufgeclipst wird, hat eine Haltenase, um das Panel zwischen der Anlagefläche und der Haltenase zu halten.

Die EP 0 008 592 A1 offenbart ein Wandelement oder Dachelement für Fahrzeuge, bei dem zwei Wandelemente an einem Profil mittels einer Klemmleiste fixiert sind. Die Klemmleiste ist mittels zwei Haken an dem Profil eingehakt und hält ein Wandelement durch eine Haltenase an dem Profil.

Die GB 308042 A offenbart eine Verbindung von Karosseriebauteilen von Fahrzeugen. Die Figur 6 zeigt ein Rahmenbauteil, das umgebogene Ecken hat, an denen die umgebogenen Enden der Panelen eingehängt werden können. Mit einer Spannschraube wird das Rahmenbauteil gespannt. Eine Abdeckung, die zwischen den beiden Panelen angeordnet ist, kann mit eingeklemmt werden.

Die US 6148488 A offenbart einen C-förmigen Clip, der auf eine Stange aufgeclipst werden kann, um eine Plane zu befestigen.

Die EP 0 021 266 A1 offenbart einen Dachrahmen für einen Fahrzeugaufbau. Zur Befestigung eines Dachblechs an einem Schenkel des Grundrahmens ist eine Klemmleiste mit einem Schenkel vorgesehen. Die Klemmleiste wird mit hinterhakenden Nasen an dem Grundrahmen befestigt, so dass das Dachblech zwischen dem Schenkel des Grundrahmens und dem Schenkel der Klemmleiste fixiert ist.

Die EP 1 927 493 A2 offenbart ein Cabrioverdeck, bei dem an einem runden Spriegel ein Befestigungsprofil augeclipst ist. Das Befestigungsprofil hat einen Aufnahmekanal, in dem das Verdeck mittels eines Wulstes befestigt ist.

Der vorliegenden Erfindung liegt die Aufgabe zu Grunde, eine Klemmvorrichtung der eingangs genannten Art zur Verfügung zu stellen, die mit geringem Bauaufwand und Herstellaufwand eine einfache Befestigung des Anbauteils mit geringem Montageaufwand ermöglicht.

Diese Aufgabe wird erfindungsgemäß dadurch gelöst, dass die Klemmvorrichtung mit einer Haltenase versehen ist, mittels der das Anbauteil formschlüssig an dem Profilrohr gehaltert ist, wobei die Haltenase mit einer Anlagefläche für das Anbauteil versehen ist, die im angebauten Zustand der Klemmvorrichtung parallel zu einer der eine weitere Anlagefläche für das Anbaubauteil bildenden nach Innen geneigten Profilwände des Profilrohrs angeordnet ist, wobei in dem Zwischenraum zwischen der Anlagefläche der Haltenase und der von der nach Innen geneigten Profilwand gebildeten Anlagefläche das Anbauteil angeordnet ist und formschlüssig gehaltert ist. Mit einer Haltenase an der Klemmvorrichtung kann insbesondere ein als Scheibe oder ein als Verdeckplane ausgebildetes Verkleidungsteil auf einfache Weise an dem Fahrerschutzdach befestigt werden. Bei der Erfindung ist die Haltenase mit einer Anlagefläche für das Anbauteil versehen, die im angebauten Zustand der Klemmvorrichtung im Wesentlichen parallel zu einer Anlagefläche des Profilrohrs angeordnet ist, wobei in dem Zwischenraum zwischen den Anlageflächen das Anbauteil angeordnet ist. Das Anbauteil, bevorzugt eine Scheibe oder eine Verdeckplane als Verkleidungsteil, wird somit nach der Befestigung und dem Verklemmen der Klemmvorrichtung an dem Profilrohr zwischen der Anlagefläche an der Haltenase und einer entsprechenden Anlagefläche des Profilrohrs formschlüssig gehalten, so dass eine formschlüssige Halterung der Scheibe in dem Einbauraum zwischen der Haltenase und der Anlagefläche des Profilrohrs ohne zusätzliche Bohrungen in der Scheibe bzw. ein Anliegen der Verdeckplane im Eckbereich an der Anlagefläche des Profilrohrs auf einfache Weise erzielt werden kann. Durch die formschlüssige Halterung der Scheibe an dem Profilrohr mittels der Haltenase sind an der Scheibe keine Bohrungen für die Halterung der Scheibe erforderlich, so dass keine vorbereitende Maßnahmen an der Scheibe erforderlich sind. Durch den Entfall der Bohrungen in der Scheibe kann die Klemmvorrichtungen an einer beliebigen Stelle und somit der von der Klemmvorrichtung gebildete Befestigungspunkt ungebunden an dem Profilrohr an einer beliebigen Stelle angeordnet werden. Bei einer von einem Verkleidungsteil gebildeten Kabinenverkleidung, beispielsweise einer Verdeckplane eines Planenverdeckes, kann mit der erfindungsgemäßen Klemmvorrichtung und deren ungebundenden Positionierbarkeit auf einfache Weise in einem Eckbereich der Verdeckplane mittels der Haltenase eine formschlüssige Halterung der Verdeckplane ohne zusätzliche Ösen in der Verdeckplane an dem Profilrohr erzielt werden, so dass ein Abschälen der Verdeckplane im Eckbereich wirksam vermieden werden kann. Hierdurch kann eine Scheibe bzw. eine Verdeckplane sowohl in der Serienausstattung als auch bei einer Nachrüstung auf einfache Weise und mit geringem Bauaufwand und Montageaufwand an dem Fahrerschutzdach angeordnet werden. Zudem sind durch die Klemmvorrichtung keine Befestigungsbohrungen bzw. Schweißbolzen an den Profilrohren des Fahrerschutzdaches erforderlich. Insgesamt wird somit mit einer erfindungsgemäßen Klemmvorrichtung mit einer Haltenase eine kostengünstige Befestigungsmöglichkeit eines als Scheibe bzw. als Kabinenverkleidung gebildeten Anbauteils an einem Fahrerschutzdach erzielt, die einfach und schnell an einer beliebigen Stelle des Profilrohr montierbar ist, die eine Serienausstattung sowie eine Nachrüstbarkeit des Fahrerschutzdaches mit dem von der Scheibe bzw. der Verdeckplane gebildeten Verkleidungsteil ermöglicht und insbesondere durch den Entfall von Bohrungen in der Scheibe sowie Gewindebohrungen oder Schweißbolzen an dem Profilrohr keine vorbereitende Maßnahmen und Arbeiten an dem Profilrohr und der Scheibe verursacht.

Hinsichtlich eines günstigen Aufbaus des Klemmstücks ergeben sich Vorteile, wenn die Haltenase einstückig an der Klemmvorrichtung angeformt ist.

Gemäß einer vorteilhaften Weiterbildung der Erfindung ist an der Haltenase im Bereich der Anlagefläche ein Weichbauteil angeordnet. Mit einem derartigen Weichbauteil, beispielsweise einem Gummistopfen oder einem EPDM-Zwischenlage (Ethylen-Propylen-Dien-Kautschuk) oder einem thermoplastischen Elastomer (TPE), kann eine Schwingungsabkopplung des Anbauteils auf einfache Weise erzielt werden. Insbesondere bei einer Scheibe, die mittels eines Dichtungsprofils an dem Profilrohr anliegt, kann hierdurch eine Schwingungsabkopplung und Geräuschreduzierung auf einfache Weise erzielt werden.

Sofern gemäß einer bevorzugten Weiterbildung der Erfindung an der Haltenase im Bereich der Anlagefläche mindestens ein Haltenoppen oder ein Verzahnungsabschnitt ausgebildet ist, kann die Befestigung einer Verdeckplane verbessert werden, in dem eine Verzahnung der Verdeckplane mit der Haltenase erzielt wird.

Sofern gemäß einer möglichen Weiterbildung der Erfindung die Klemmvorrichtung mit einer weiteren Haltenase zur weiteren Befestigung eines zweiten Anbauteils versehen ist, kann insbesondere in Verbindung mit einem Profilrohr, das einen Profilquerschnitt mit vier hinterschnittig angeordneten Profilwänden und somit zwei Hinterschneidungen aufweist, eine formschlüssige Befestigung von zwei Anbauteilen an dem Profilrohr erzielt werden. Hierdurch wird es möglich, an dem Profilrohr mit einer erfindungsgemäßen Klemmvorrichtung mittels der beiden Haltenasen zwei Scheiben bzw. zwei Verdeckplanen an entsprechenden von jeweils zwei Profilwänden gebildeten Hinterschneidungen formschlüssig zu haltern.

Die Klemmvorrichtung kann gemäß einer möglichen Ausgestaltungsform der Erfindung von einem mehrteiligen, insbesondere zweiteiligen, Klemmstück gebildet sein, das das Profilrohr zumindest teilweise umgreift und zwei hakenförmige Fortsätze zum jeweiligen Angreifen an einer der Profilwände des Profilrohres aufweist, wobei das Klemmstück mittels einer Klemmeinrichtung an dem Profilrohr anklemmbar ist. Bevorzugt ist eine derartige aus zwei Klemmstücken bestehende Klemmvorrichtung mittels einer Klemmschraube an dem Profilrohr anklemmbar. Sofern an mindestens einem der beiden Klemmstücke eine erfindungsgemäße Haltenase angeformt ist, kann somit durch Verklemmen der Klemmstücke eine Scheibe oder eine Verdeckplane ohne zusätzliche Bohrungen bzw. Ösen an dem Profilrohr gehaltert werden.

Besondere Vorteile ergeben sich, wenn die Klemmvorrichtung gemäß einer bevorzugten Ausführungsform der Erfindung als einteiliges Klemmstück ausgebildet ist, das das Profilrohr zumindest teilweise umgreift und zwei hakenförmige Fortsätze zum jeweiligen Angreifen an einer der Profilwände des Profilrohres aufweist, wobei das Klemmstück zwischen den hakenförmigen Fortsätzen elastisch verformbar ist und das Klemmstück mittels einer Spannvorrichtung an dem Profilrohr anklemmbar ist. Ein derartiges einteiliges Klemmstück, das zwei hakenförmige Fortsätze aufweist und zwischen den beiden hakenförmigen Fortsätzen elastisch verformbar ist, weist einen geringen Bauaufwand und Herstellaufwand auf. Zudem wird mit einem derartigen einteiligen Klemmstück eine einfache und schnelle Montage an dem Profilrohr ermöglicht, da das Klemmstück durch die elastische Verformbarkeit im Sinne einer Clipsverbindung mit den beiden hakenförmigen Fortsätzen auf die hinterschnittig angeordneten Profilwände des Profilrohres aufgesteckt werden kann und somit am Profilrohr positioniert werden kann und anschließend mit der Spannvorrichtung zur Anlage an das Profilrohr gebracht werden und an dem Profilrohr angeklemmt werden kann.

Die elastische Verformbarkeit des Klemmstücks zum Aufclipsen des Klemmstücks auf das Profilrohr kann durch entsprechende elastische Materialeigenschaften des Klemmstücks erzielt werden. Gemäß einer bevorzugten Ausgestaltungsform der Erfindung ist das Klemmstück zwischen den hakenförmigen Fortsätzen mit einem Scharniergelenk versehen. Mit einem derartig zwischen den beiden hakenförmigen Fortsätzen angeordneten Scharniergelenk kann die elastische Verformbarkeit zum Aufclipsen des Klemmstücks auf das Profilrohr auf einfache Weise erzielt werden.

Hinsichtlich einer kostengünstigen Herstellung des Klemmstücks ergeben sich besondere Vorteile, wenn das Scharniergelenk als Filmscharnier ausgebildet ist. Ein Filmscharnier kann durch eine entsprechende Aussparung in dem Klemmstück auf einfache Weise hergestellt werden.

Hinsichtlich einer einfachen Herstellung der erfindungsgemäßen Klemmvorrichtung ergeben sich besondere Vorteile, wenn die Klemmvorrichtung als Kunststoffbauteil ausgebildet ist. Eine derartige, als Kunststoffteil ausgebildete Klemmvorrichtung ermöglicht auf einfache Weise eine elastische Verformbarkeit zwischen den beiden hakenförmigen Fortsätzen bzw. kann auf einfache Weise bereits bei der Herstellung, beispielsweise einem Spritzgießprozess, mit dem Scharniergelenk zwischen den beiden hakenförmigen Fortsätzen versehen werden.

Gemäß einer bevorzugten Ausgestaltungsform der Erfindung weist das Klemmstück einen an die Außenkontur, insbesondere einen konvexen Außenkonturbereich, des Profilrohr angepasste Innenkontur auf, an der die hakenförmigen Fortsätze einstückig angeformt sind.

Die Spannvorrichtung kann gemäß einer Ausgestaltungsform der Erfindung ein Federelement, insbesondere eine Federklammer, umfassen, das mit den beiden hakenförmigen Fortsätzen des Klemmstücks in Anlage steht und auf das Klemmstück aufsteckbar ist. Mit einer derartigen Federklammer, die im Sinne einer Clipsverbindung auf das Klemmstück aufgesteckt wird und die mit beiden hakenförmigen Fortsätzen des Klemmstücks in Anlage steht, können beide hakenförmigen Fortsätze des Klemmstücks auf einfache Weise an die entsprechende Profilwand angedrückt werden, um eine sichere Befestigung des Klemmstücks an dem Profilrohr zu erzielen.

Die Spannvorrichtung kann gemäß einer alternativen Ausgestaltungsform der Erfindung mindestens ein Federelement, insbesondere ein Federblech, umfassen, das mit einem hakenförmigen Fortsatz des Klemmstücks in Anlage steht und mittels eines Spannmittels mit dem Klemmstück verspannbar ist. Über das von dem Spannmittel an dem Klemmstück verspannte Federelement kann zumindest ein hakenförmiger Fortsatz des Klemmstücks an die entsprechende Profilwand angedrückt werden, um eine sichere Befestigung des Klemmstücks an dem Profilrohr zu erzielen.

Gemäß einer bevorzugten Ausführungsform der Erfindung weist die Spannvorrichtung zwei Federelemente, insbesondere Federbleche, auf, wobei jedes Federelement mit einem ersten Ende jeweils mit einem hakenförmigen Fortsatz des Klemmstücks in Anlage steht und die beiden Federelement mittels eines Spannmittels gegeneinander verspannbar sind. Mit zwei gegeneinander verspannbaren Federelementen kann durch entsprechendes Andrücken beider hakenförmigen Fortsätze des Klemmstücks an die jeweilige Profilwand des Profilrohres eine besonders stabile Befestigung des Klemmstücks an dem Profilrohr erzielt werden.

Besondere Vorteile ergeben sich, wenn gemäß einer Weiterbildung der Erfindung die Federelemente im montierten Zustand jeweils mit einem zweiten Ende an einem Anlagepunkt miteinander in Wirkverbindung stehen, wobei das Spannmittel zwischen den ersten und zweiten Enden der Federelemente angeordnet ist. Die beiden Federelement sind an dem Anlagepunkt im Sinne einer Schwenkachse miteinander verbunden, so dass mit dem Spannmittel, das zwischen den beiden Enden des jeweiligen Federelements angeordnet ist, an den beiden ersten Enden der Federelemente eine Verschwenken gegeneinander erzielt wird, wodurch auf einfache Weise sichergestellt wird, dass beide hakenförmige Fortsätze des Klemmstücks gegen die entsprechende Profilwand des Profilrohr verspannt werden.

Im angebauten Zustand ist hierzu zweckmäßigerweise ein erstes Federelement im Bereich eines ersten hakenförmigen Fortsatzes des Klemmstücks, der an einer ersten Profilwand des Profilrohres angreift, angeordnet und verspannt den ersten hakenförmigen Fortsatz gegen die erste Profilwand und ist ein zweites Federelement im Bereich eines zweiten hakenförmigen Fortsatzes des Klemmstücks, der an einer zweiten Profilwand des Profilrohres angreift, angeordnet und verspannt den zweiten hakenförmigen Fortsatz gegen die zweite Profilwand. Hierdurch kann mit den beiden Federelementen das Klemmstück sicher in Anlage an das Profilrohr gebracht werden und das Klemmstück mit dem Profilrohr verklemmt werden.

Sofern hierbei das Klemmstück zwischen der Haltenase und dem zweiten hakenförmigen Fortsatz mit einer Durchgangsöffnung für das zweite Federelement versehen ist, kann das zweite Federelement nach dem Aufclipsen des Klemmstücks auf das Profilrohr auf einfache Weise über die Durchgangsöffnung eingesteckt werden, um mit dem ersten Ende den zweiten hakenförmigen Fortsatz des Klemmstücks gegen die entsprechende Profilwand des Profilrohres zu verspannen.

Bevorzugt ist das Spannmittel als Spannverschraubung ausgebildet. Mit einer von einer Spannschraube und einer Gewindemutter gebildeten Spannverschraubung kann die Befestigung des Klemmstücks an dem Profilrohr über ein Federelement bzw. zwei Federelemente auf einfache Weise erzielt werden.

Gemäß einer zweckmäßigen Weiterbildung der Erfindung ist die Klemmvorrichtung mit einem Befestigungsadapter, insbesondere einer Gewindebohrung oder einem Halter, für ein weiteres Anbauteil, versehen. An einem derartigen Befestigungsadapter, bevorzugt einer oder mehrerer Gewindebohrungen, an der Klemmvorrichtung, kann zusätzlich zu dem mittels der Haltenase gehalterten Anbauteil ein weiteres Anbauteil an der Klemmvorrichtung befestigt werden. Sofern gemäß einer bevorzugten Ausführungsform die Klemmvorrichtung mit einer Haltenase für eine Scheibe bzw. eine Verdeckplane versehen ist, kann mit einem derartigen zusätzlichen Befestigungsadapter, das Klemmstück auf einfache Weise zur Befestigung eines zusätzlichen Anbauteils, beispielsweise einer Lampe, eines Arbeitsscheinwerfers, eines Spiegels, eines Schutzgitters, einer Ablage oder eines Schreibbretts, an dem Profilrohr des Fahrerschutzdaches genutzt werden oder in die Klemmvorrichtung eine Kabelbefestigung und/oder eine Kabelführung integriert werden, um als Zusatzfunktion mit der erfindungsgemäßen Klemmvorrichtung Kabel an den Profilrohren des Fahrerschutzdaches verlegen und haltern zu können.

Hinsichtlich einer günstigen Stabilität des Klemmstücks ergeben sich Vorteile, wenn das Klemmstück einen im Wesentlichen U-förmigen Querschnitt mit zwei senkrecht zu einem mit der Innenkontur versehenen Stegabschnitt angeordneten Flanschabschnitten aufweist, wobei der Querschnitt einen Einbauraum für die Spannvorrichtung bildet. Durch den Einbau der von dem Federelement bzw. den Federelementen und der Spannverschraubung gebildeten Spannvorrichtung in das Klemmstück wird ein platzsparender Aufbau der Klemmvorrichtung erzielt.

Bevorzugt ist eine Abdeckung zum Verschließen des Einbauraumes vorgesehen, wodurch die in den Einbauraum des Klemmstücks montierte Spannvorrichtung vor Beschädigungen und Verschmutzungen geschützt werden kann.

Hinsichtlich einer einfachen und kostengünstigen Montage ergeben sich Vorteile, wenn die Abdeckung mittels einer Clipsverbindung an dem Klemmstück befestigbar ist.

Die Erfindung betrifft weiterhin ein Fahrzeug, insbesondere Flurförderzeug, Schlepper oder Kommunalfahrzeug, mit einer erfindungsgemäßen Klemmvorrichtung, wobei mittels der Klemmvorrichtung eine Scheibe bzw. ein von einer Verdeckplane gebildetes Verkleidungsteil als Kabinenverkleidung an dem Fahrerschutzdach befestigt ist. Mit der erfindungsgemäßen Klemmvorrichtung kann in Verbindung mit der Haltenase eine einfache und kostengünstige Befestigungsmöglichkeit für eine Scheibe eines Fahrerschutzdaches erzielt werden, wobei keine vorbereitenden Maßnahmen an dem Profilrohr und der Scheibe durch Bohrungen, Gewinde oder Schweißbolzen erforderlich sind. Bei einer Verdeckplane eines Planenverdeckes kann mit der erfindungsgemäßen Klemmvorrichtung in Verbindung mit der Haltenase eine einfache und kostengünstige Befestigungsmöglichkeit für die Verdeckplane in einem Eckbereich des Fahrerschutzdaches erzielt werden, um ein Abschälen der Verdeckplane am Eckbereich zu vermeiden. Dadurch kann die erfindungsgemäße Klemmvorrichtung für die Serienausstattung als auch für die Nachrüstung eines Fahrerschutzdaches mit einer Scheibe bzw. einer Verdeckplane verwendet werden. Zudem ergibt sich eine einfache und schnelle Montage der Klemmvorrichtung, wobei als weiterer Vorteil eine ungebundene Positionierung der Klemmvorrichtung an einer beliebigen Stelle des Profilrohres möglich ist.

Weitere Vorteile und Einzelheiten der Erfindung werden anhand der in den schematischen Figuren dargestellten Ausführungsbeispiele näher erläutert. Hierbei zeigt
- Figur 1: ein Fahrzeug in einer Seitenansicht,
- Figur 2: eine erste Ausführungsform einer erfindungsgemäßen Klemmvorrichtung in einer perspektivischen Darstellung,
- Figur 3: die Klemmvorrichtung der Figur 2 in einem Querschnitt,
- Figur 4: eine zweite Ausführungsform einer erfindungsgemäßen Klemmvorrichtung in einer perspektivischen Darstellung und
- Figur 5: die Klemmvorrichtung der Figur 4 in einem Querschnitt.

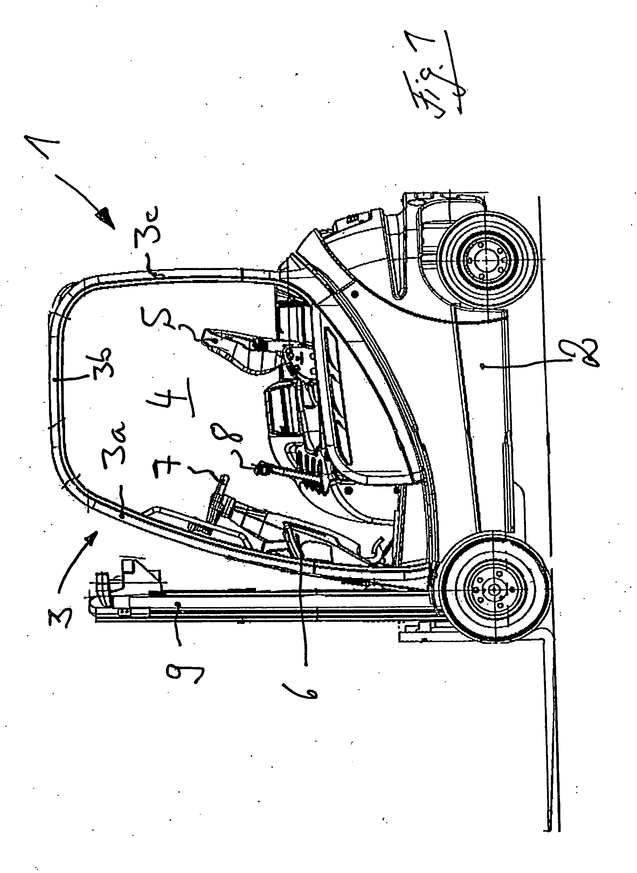

In der Figur 1 ist ein als Gegengewichtsgabelstapler ausgebildetes Flurförderzeug als Beispiel eines Fahrzeugs 1 dargestellt. Das Fahrzeug 1 umfasst einen Fahrzeugrahmen 2 mit einem Fahrerschutzdach 3, das einen Fahrerarbeitsplatz 4 für eine Bedienperson bildet. Der Fahrerarbeitsplatz umfasst beispielsweise einen Fahrersitz 5, eine Bedienkonsole 6 mit einem Lenkrad 7, und Bedieneinrichtungen 8 für eine Arbeitshydraulik.

Das Fahrerschutzdach 3 ist von seitlichen vorderen Profilrohren 3a, dachseitigen Profilrohren 3b und hinteren Profilrohren 3c gebildet, die mittels entsprechender Querverbindungen querversteifend verbunden sind. Zwischen den vorderen Profilrohren 3a kann eine einem Hubmast 9 zugewandte Scheibe, beispielsweise eine Glasscheibe, angeordnet sein. Zudem ist es möglich, an den hinteren Profilrohren 3c eine heckseitige Scheibe, beispielsweise eine Glasscheibe, anzuordnen. Weiterhin kann an den dachseitigen Profilrohren 3b eine Scheibe, bevorzugt eine Glasscheibe, angeordnet werden. Bei der Ausbildung des Fahrerschutzdaches 3 mit einem Planenverdeck sind bevorzugt an einer oder beiden seitlichen Zustiegsöffnungen des Fahrerschutzdaches 3, die jeweils von den Profilrohren 3a, 3b und 3c umgrenzt werden, eine Kabinenverkleidung in Form eines von einer Verdeckplane gebildeten Verkleidungsteils angeordnet.

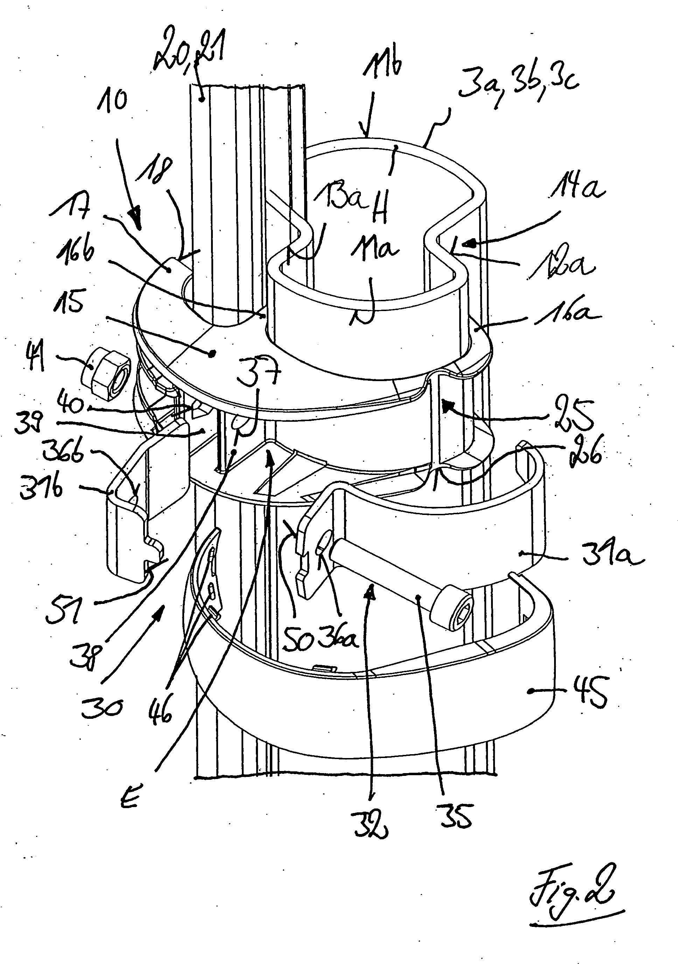

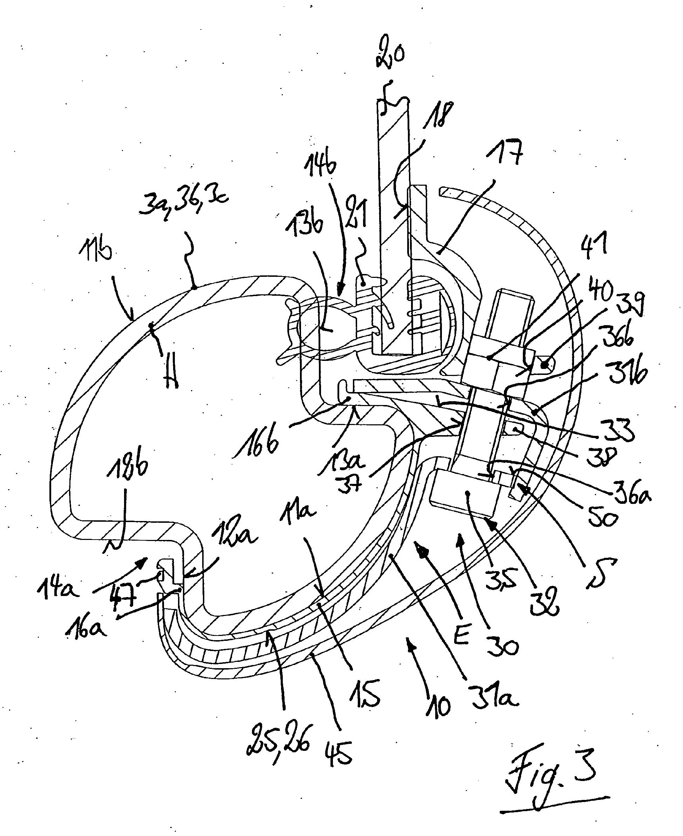

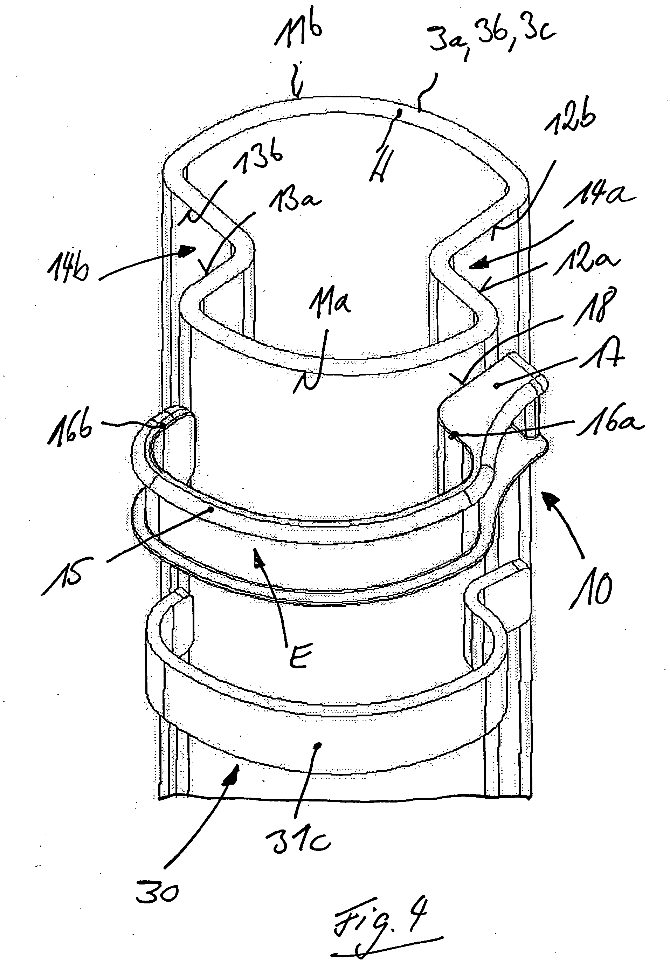

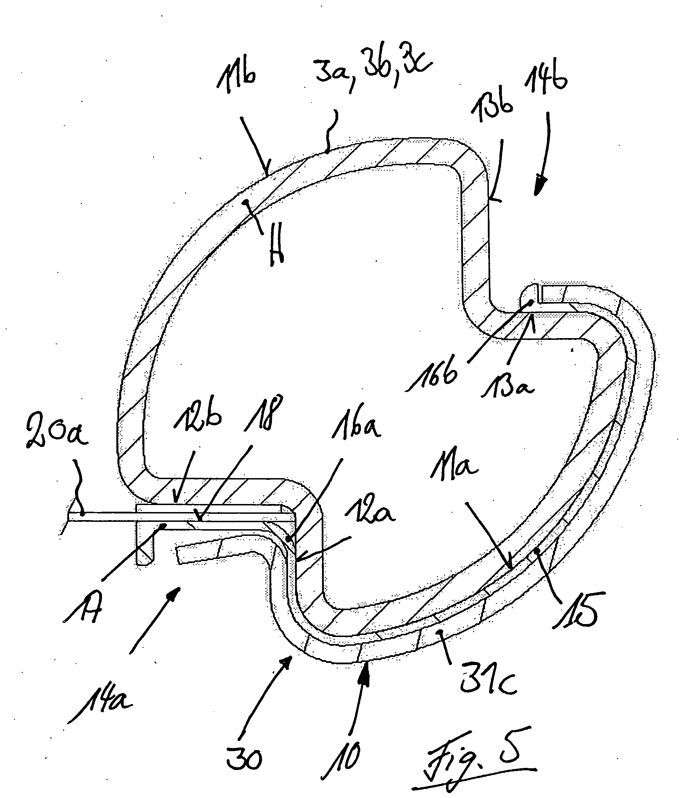

In den Figuren 2 und 3 ist eine erfindungsgemäße Klemmvorrichtung 10 zur Befestigung eines bevorzugt als Scheibe 20 ausgebildeten Anbauteils an den Profilrohren 3a bzw. 3b. bzw. 3c dargestellt. In den Figuren 4 und 5 ist eine erfindungsgemäße Klemmvorrichtung 10 zur Befestigung eines bevorzugt als Verdeckplane 20a ausgebildeten Verkleidungsteils an den Profilrohren 3a bzw. 3b. bzw. 3c dargestellt.

Die Profilrohre 3a, 3b bzw. 3c weisen zumindest abschnittsweise einen von der Kreisform abweichenden, bevorzugt hohlen Profilquerschnitt H auf. Die Außenkontur des Profilquerschnitts H weist im dargestellten Ausführungsbeispiel einen symmetrischen Aufbau mit zwei konvexen, nach außen gekrümmte Umfangswänden 11a, 11b und zwei nach Innen gewandten Hinterschneidungen 14a, 14b auf. Das Profilrohr 3a, 3b, 3c besteht hierzu weiterhin aus jeweils zwei hinterschnittig an den Umfangswänden 11a bzw. 11b angeordneten Profilwänden 12a, 13a bzw. 12b, 13b, wodurch ein Profilquerschnitt H mit einem "8-er" Profil gebildet ist. Die Profilwände 12a, 13a bzw. 12b, 13b sind hierbei jeweils nach Innen geneigt angeordnet, wodurch im Bereich der nach innen geneigten Profilwände 12a, 12b die V-förmige Hinterschneidung 14a und im Bereich der nach Innen geneigten Profilwände 13a, 13b die V-förmige Hinterschneidung 14b des Profilrohres gebildet wird.

Die erfindungsgemäße Klemmvorrichtung 10 gemäß den Figuren 2 bis 5 umfasst ein in der dargestellten Ausführungsform einteiliges Klemmstück 15, das beispielsweise die konvexe Umfangswand 11a umgreift und mit einer an den konvexen Außenkonturbereich der Umfangswand 11a angepassten bogenförmigen Innenkontur versehen ist. Das Klemmstück 15 ist mit einem ersten hakenförmigen Fortsatz 16a versehen, der im angebauten Zustand an der Profilwand 12a anliegt und an dieser angreift. Das Klemmstück 15 ist mit einem zweiten hakenförmigen Fortsatz 16b versehen, der im angebauten Zustand an der Profilwand 13a anliegt und an dieser angreift.

In umfangsseitiger Verlängerung ist die Klemmvorrichtung 10 erfindungsgemäß mit einer einstückig angeformten Haltenase 17 versehen, die im Bereich der Hinterschneidung 14b bzw. der Hinterschneidung 14a angeordnet ist und an der eine Anlagefläche 18 für das von einer Scheibe 20 bzw. einer Verdeckplane 20a gebildete, als Verkleidungsteil ausgebildete Anbauteil ausgebildet ist. Die Anlagefläche 18 ist in dem dargestellten angebauten Zustand des Klemmstücks 15 im Wesentlichen parallel zu der Profilwand 13b bzw. der Profilwand 12b der entsprechenden Hinterschneidung des Profilrohrs angeordnet, die eine Anlagefläche für die Scheibe 20 bzw. die Verdeckplane 20a an dem Profilrohr bildet. Die Scheibe 20 bzw. die Verdeckplane 20a ist hierbei in dem Einbauraum, der von der Anlagefläche 18 der Haltenase 17 und der die weitere Anlagefläche bildenden Profilwand 13b bzw. 12b gebildet ist, angeordnet und formschlüssig gehaltert.

Bevorzugt ist das Klemmstück 15 von einem Kunststoffbauteil gebildet.

Im dargestellten Ausführungsbeispiel gemäß den Figuren 2 und 3 ist die Scheibe 20 am Außenumfang mit einem Dichtungsprofil 21 versehen. Die Haltenase 17 steht hierbei mit der Anlagefläche 18 mit einer Außen- bzw. Innenseite der Scheibe 20 in Kontakt. An der Profilwand 13b des Profilrohrs liegt die Scheibe 20 über das Dichtungsprofil 21 an.

Das Klemmstück 15 gemäß den Figuren 2 und 3 ist zwischen den beiden hakenförmigen Fortsätzen 16a, 16b zur elastischen Verformbarkeit mit einem Scharniergelenk 25 versehen, das im dargestellten Ausführungsbeispiel von einem Filmscharnier ausgebildet ist. Das Scharniergelenk 25 ist durch eine entsprechende V-förmige Aussparung 26 im Querschnitt des Klemmstücks 15 hergestellt. Das Scharniergelenk 25 ermöglicht eine Beweglichkeit des hakenförmigen Fortsatzes 16a, wodurch das einteilige Klemmstück 15 auf das Profilrohr 3a, 3b, 3c ausgesteckt werden kann. Im aufgesteckten Zustand liegt das Klemmstück 15 an der konvexen Umfangswand 11a an, wobei die hakenförmigen Fortsätze 16a, 16b die Umfangswand 11a hintergreifen und an den beiden hinterschnittig angeordneten Profilwänden 12a, 13a angreifen.

Gemäß der in den Figuren 4 und 5 dargestellten Ausführungsform der erfindungsgemäßen Klemmvorrichtung 10 wird die elastische Verformbarkeit zwischen den beiden hakenförmigen Fortsätzen 16a, 16b bei einem einteiligen Klemmstück 15 durch entsprechende Materialeigenschaften des aus einem elastischen Kunststoff bestehenden Klemmstücks 15 erzielt. Die elastischen Eigenschaften des Klemmstücks 15 ermöglichen eine Beweglichkeit der hakenförmigen Fortsätze 16a, 16b, wodurch das einteilige Klemmstück 15 auf das Profilrohr 3a, 3b, 3c ausgesteckt werden kann. Im aufgesteckten Zustand liegt das Klemmstück 15 an der konvexen Umfangswand 11a an, wobei die hakenförmigen Fortsätze 16a, 16b die Umfangswand 11a hintergreifen und an den beiden hinterschnittig angeordneten Profilwänden 12a, 13a angreifen.

Zur Befestigung des Klemmstücks 15 an dem Profilrohr 3a, 3b, 3c umfasst die Klemmvorrichtung 10 eine Spannvorrichtung 30, mittels der das Klemmstück 15 in Anlage an das Profilrohr 3a, 3b, 3c gebracht und an dem Profilrohr 3a, 3b, 3c angeklemmt werden kann.

Die Spannvorrichtung 30 der Figuren 2 und 3 umfasst zwei bevorzugt von Federblechen gebildete Federelemente 31a, 31b, die mittels eines Spannmittels 32 mit dem Klemmstück 15 verspannbar sind. Das Federelement 31a ist als bogenförmiger Federbügel ausgebildet, der im angebauten Zustand im Bereich der konvexen Innenkontur des Klemmstücks 15 angeordnet ist mit einem ersten, nach Innen in die Hinterschneidung 14a hineinragenden und abgebogenen ersten Ende mit dem hakenförmigen Fortsatz 16a des Klemmstücks 15 in Wirkerbindung steht. Das Federelement 31b ist als leicht abgeknickter Federbügel ausgebildet, der sich mit einem abgeknickten Bereich im eingebauten Zustand durch eine Durchgangsöffnung 33 des Klemmstücks 15 erstreckt, die zwischen dem hakenförmigen Fortsatz 16b und der Haltenase 17 angeordnet ist. An dem abgeknickten Bereich steht das Federelement 31b mit einem in die Hinterschneidung 14b hineinragenden ersten Ende mit dem hakenförmigen Fortsatz 16b des Klemmstücks 15 in Wirkverbindung.

Das Spannmittel 32 ist im vorliegenden Ausführungsbeispiel von einer Spannverschraubung mit einer Spannschraube 35 und einer Gewindemutter 41 gebildet. Die Spannschraube 35 erstreckt sich durch Durchgangsbohrungen 36a, 36b in den beiden Federelementen 31a, 31b und durch eine Durchgangsbohrung 37 in einer Versteifungsrippe 38 des Klemmstücks 15, die in Verlängerung des hakenförmigen Fortsatz 16b angeordnet ist. An dem Klemmstück 15 ist im Bereich der Haltenase 17 eine weitere Versteifungsrippe 39 ausgebildet, die mit einer Ausnehmung 40 versehen ist, in der die Gewindemutter 41 drehfest und axial verschiebbar gehaltert ist, mit der die Spannschraube 35 verschraubt werden kann.

Das Federelement 31a ist an einem zweiten Ende radial nach außen umgebogen, wobei an diesem abgebogenen Ende die Durchgangsbohrung 36a angeordnet ist. Eine Außenstirnfläche 50 dieses nach Außen abgebogenen Endes des Federelements 31a bildet eine Anlagefläche, an der im montierten Zustand das zweite Federelement 31b mit der Stirnseite 51 eines in Richtung zu dem ersten Federelement 31a abgebogenen zweiten Endes in Kontakt steht, wodurch ein Anlagepunkt und eine Schwenkachse S zwischen den beiden Federelementen 31a, 31b gebildet wird. Die von der Spannschraube 35 und der Gewindemutter 41 gebildeten Spannverschraubung ist zwischen dieser Schwenkachse S, die an den beiden zweiten Enden der Federelemente 31a, 31b ausgebildet ist, und den beiden ersten Enden der beiden Federelemente 31a, 31b angeordnet. Durch Verschrauben der Spannverschraubung kann somit eine Spannbewegung der beiden Federelemente 31a, 31b um die Schwenkachse S erzielt werden, bei der die beiden ersten Enden nach dem Prinzip einer Pinzette aufeinander zu verschwenkt werden.

Die Spannvorrichtung 30 der Figuren 4 und 5 umfasst ein von einer Federklammer gebildetes Federelement 31c, das auf das Klemmstück 15 aufsteckbar ist. Das Federelement 31a ist als bogenförmig gebogene Federklammer ausgebildet, die im angebauten Zustand im Bereich der konvexen Innenkontur des Klemmstücks 15 angeordnet ist mit einem ersten, nach Innen in die Hinterschneidung 14a hineinragenden und abgebogenen ersten Ende mit dem hakenförmigen Fortsatz 16a des Klemmstücks 15 in Wirkverbindung steht und mit einem zweiten, nach Innen in die Hinterschneidung 14b hineinragenden und abgebogenen Ende mit dem hakenförmigen Fortsatz 16b des Klemmstücks 15 in Wirkverbindung steht.

Das Klemmstück 15 weist in Längsrichtung des Profilrohrs 3a, 3b, 3c einen U-förmigen Querschnitt mit einem in Längsrichtung des Profilrohres 3a, 3b, 3c angeordneten Stegabschnitt, der mit der bogenförmigen Innenkontur versehen ist, und mit seitlichen, senkrecht zum Stegschnitt angeordneten Flanschabschnitten auf, zwischen denen ein Einbauraum E für die aus den beiden Federelementen 31a, 31b und dem Spannmittel 32 bestehenden Spannvorrichtung 30 der Figuren 2, 3 bzw. die von dem Federelement 31c gebildeten Spannvorrichtung 30 der Figuren 4, 5 gebildet ist. Der Einbauraum E an dem Klemmstück 15 kann nach erfolgter Montage der Spannvorrichtung 30 - wie in den Figuren 2, 3 dargestellt ist - durch eine Abdeckung 45 verschlossen werden. Die Abdeckung 45 kann hierbei mittels einer Clipsverbindung an dem Klemmstück 15 befestigt werden, die von Rastnasen 46 an der Abdeckung 45 gebildet werden kann, die mit entsprechenden Rastausnehmungen 47 in dem Klemmstück 15 zusammenwirken.

Zur Montage der Scheibe 20 wird die Scheibe 20 in die entsprechende von den beiden Profilwänden 13a, 13b gebildete Hinterschneidung 14b eingelegt. Anschließend kann das bevorzugt einteilige Klemmstück 15 aufgesteckt werden, wobei dieses mit den beiden hakenförmigen Fortsätzen 16a, 16b die Umfangswand 11a hintergreift und mit den hinterschnittig angeordneten Profilwänden 12a, 13a an den Hinterschneidungen 14a, 14b in Kontakt gelangt. Nach dem Anlegen des ersten Federelements 31a und Einstecken des zweiten Federelements 31b durch die Durchgangsöffnung 33 in dem Klemmstück 15 kann die Gewindemutter 41 in die Ausnehmung 40 eingelegt und die Spannschraube 25 durch die Durchgangsbohrungen 36a, 36b, 37 geführt und mit der Gewindemutter 41 verschraubt werden. Wie in der Figur 3 dargestellt, liegt die montierte Spannschraube 35 mit dem Schraubenkopf an dem nach Außen abgebogenen zweiten Ende des ersten Federelements 31a an und liegt die in der Ausnehmung 40 des Klemmstücks 15 drehfest angeordnete Gewindemutter 41 an dem zweiten Federelement 31b an. Beim Verschrauben der Spannschraube 35 mit der Gewindemutter 41 wird somit eine Klemmbewegung der beiden Federelemente 31a, 31b um die Schwenkachse S erzielt, so dass die beiden Federelemente 31a, 31b gegeneinander verspannt werden und jeweils mit den ersten Enden den entsprechenden hakenförmigen Fortsatz 16a bzw. 16b des Klemmstücks 15 gegen die Profilwand 12a bzw. 13a verspannen. Durch das Spannmittel 32 und die Federelemente 31a, 31b wird somit das Klemmstück 15 in Anlage an das Profilrohr 3a, 3b, 3c gebracht, wobei über die Haltenase 17 mit der Anlagefläche 18 die Scheibe 20 in dem von der Anlagefläche 18 und der Profilwand 13b gebildeten Einbauraum formschlüssig gehalten wird, so dass die Scheibe 20 in der Hinterschneidung 14b des Profilquerschnitts H in die vorbestimmten Position gebracht und gehalten wird. Nach erfolgter Montage des Spannmittels 32 kann die Abdeckung 45 auf das Klemmstück 15 aufgesteckt werden, um den Einbauraum E abzudecken.

Zur Montage der Verdeckplane 20a wird die Verdeckplane 20a in die entsprechende von den beiden Profilwänden 12a, 12b gebildete Hinterschneidung 14a eingelegt. Anschließend kann das bevorzugt einteilige Klemmstück 15 aufgesteckt werden, wobei dieses mit den beiden hakenförmigen Fortsätzen 16a, 16b die Umfangswand 11a hintergreift und mit den hinterschnittig angeordneten Profilwänden 12a, 13a an den Hinterschneidungen 14a, 14b in Kontakt gelangt. Durch Aufclipsen des von der Federklammer gebildeten Federelements 20c werden durch die beiden entsprechenden Federenden des Federelements 31c die entsprechenden hakenförmigen Fortsätze 16a bzw. 16b des Klemmstücks 15 gegen die Profilwand 12a bzw. 13a verspannt. Durch Aufstecken des Federelements 31c wird somit das Klemmstück 15 in Anlage an das Profilrohr 3a, 3b, 3c gebracht, wobei über die Haltenase 17 mit der Anlagefläche 18 die Verdeckplane 20a in dem von der Anlagefläche 18 und der Profilwand 12b gebildeten Einbauraum formschlüssig gehalten wird, so dass die Verdeckplane 20a in der Hinterschneidung 14a des Profilquerschnitts H in die vorbestimmten Position gebracht und gehalten wird. Sofern das Klemmstück 15 der Figuren 4 und 5 an einem Eckbereich der Verdeckplane 20a an dem Profilrohr 3a, 3b, 3c angeordnet und befestigt wird, kann somit auf einfache Weise ein Abschälen der Verdeckplane 20a im Eckbereich verhindert werden.

Die Erfindung ist nicht auf die in den Figuren dargestellte Ausführungsform beschränkt.

An der Haltenase 17 der Klemmvorrichtung 10 der Figuren 2 bzw. 3 kann im Bereich der Anlagefläche 18 für die Glasscheibe 20 ein Weichbauteil, beispielsweise ein EPDM-Element oder ein Kunststoffstopfen angeordnet werden, um eine Schwingungsabkopplung der Scheibe 20 zu erzielen.

An der Haltenase 17 der Klemmvorrichtung 10 der Figuren 4 bzw. 5 können im Bereich der Anlagefläche 18 für die Verdeckplane 20a Haltenoppen oder ein Verzahnungsabschnitt ausgebildet werden, um eine Verzahnung zwischen der Verdeckplane und der Haltenase 17 zu erzielen.

Bei entsprechender Steifigkeit des Klemmstücks 15 gemäß den Figuren 2 und 3 im Bereich des hakenförmigen Fortsatzes 16b bzw. 16a kann eine Spannvorrichtung mit einem einzigen Federblech 31a bzw. 31b ausreichend sein, das mittels eines Spannmittels gegen das Klemmstück 15 verspannt wird, um eine entsprechende Befestigung des Klemmstücks 15 an dem Profilrohr zu erzielen.

Die Klemmvorrichtung 10 gemäß den Figuren 2 und 3 kann zusätzlich zu der Haltenase 17 im Bereich der Hinterschneidung 14b mit einer weiteren Haltenase im Bereich der Hinterschneidung 14a versehen werden, um eine weitere Scheibe in der Hinterschneidung 14a zwischen der weiteren Haltenase und der Profilwand 12b haltern zu können. Hierdurch kann mit dem Klemmstück 15 eine doppelte Scheibenbefestigung von zwei Scheiben an dem Profilrohr 3a, 3b, 3c auf einfache Weise erzielt werden. Entsprechend kann die Klemmvorrichtung 10 der Figuren 4 und 5 zusätzlich zu der Haltenase 17 im Bereich der Hinterschneidung 14a mit einer weiteren Haltenase im Bereich der Hinterschneidung 14b versehen werden, um eine weitere Verdeckplane 20a in der Hinterschneidung 14b zwischen der weiteren Haltenase und der Profilwand 13b haltern zu können. Hierdurch kann mit dem Klemmstück 15 eine doppelte Planenbefestigung von zwei Verdeckplanen 20a an dem Profilrohr 3a, 3b, 3c auf einfache Weise erzielt werden

Die Klemmvorrichtung 10 gemäß den Figuren 2 und 3 kann ebenfalls zur Befestigung einer Verdeckplane 20a bzw. die Klemmvorrichtung 10 gemäß den Figuren 4 und 5 zur Befestigung einer Scheibe 20 verwendet werden.

Die Klemmvorrichtung 10 kann mit einem oder mehreren weiteren Befestigungsadaptern, beispielsweise Gewindebohrungen, versehen sein, um an der die Scheibe 20 bzw. die Verdeckplane 20a halternden Klemmvorrichtung 10 weitere Anbauteile, beispielsweise Spiegel, Lampen, Arbeitsscheinwerfer oder Schutzgitter zu befestigen. Zudem kann bei der erfindungsgemäßen Klemmvorrichtung 10 eine Kabelbefestigung und/oder eine Kabelführung integriert werden, um als Zusatzfunktion mit der Klemmvorrichtung 10 Kabel an den Profilrohren 3a, 3b, 3c des Fahrerschutzdaches 3 verlegen und haltern zu können.

Insbesondere ist die Erfindung nicht auf ein einteiliges Klemmstück 15 beschränkt. Die Klemmvorrichtung 10 kann ebenfalls von bevorzugt zwei miteinander verklemmbaren Klemmstücken gebildet werden, von denen jedes mit einem hakenförmigen Fortsatz 16a bzw. 16b versehen ist, wobei an mindestens einem Klemmstück eine entsprechende Haltenase zur formschlüssigen Halterung einer Scheibe oder einer Verdeckplane angeformt sein kann.

## Patentansprüche

1. Klemmvorrichtung (10) an einem Profilrohr (3a; 3b; 3c) eines Fahrerschutzdaches (3) eines Fahrzeugs (1) zur Befestigung eines Anbauteils, insbesondere eines von einer Scheibe (20) oder einer Verdeckplane (20a) gebildeten Verkleidungsteils, wobei das Profilrohr (3a; 3b; 3c) einen Profilquerschnitt (H) mit zwei konvexen, nach außen gekrümmten Umfangswänden (11a, 11b) und mit zwei nach Innen gewandten V-förmigen Hinterschneidungen (14a, 14b) aufweist, wobei eine erste V-förmige Hinterschneidung (14a) von zwei hinterschnittig an den Umfangswänden (11a, 11b) und nach Innen geneigten Profilwänden (12a, 12b) gebildet ist und eine zweite Hinterschneidung (14b) von zwei hinterschnittig an den Umfangswänden (11a, 11b) und nach Innen geneigten Profilwänden (13a, 13b) gebildet ist, **dadurch gekennzeichnet, dass** die Klemmvorrichtung (10) mit einer Haltenase (17) versehen ist, mittels der das Anbauteil (20; 20a) formschlüssig an dem Profilrohr (3a; 3b; 3c) gehaltert ist, wobei die Haltenase (17) mit einer Anlagefläche (18) für das Anbauteil (20; 20a) versehen ist, die im angebauten Zustand der Klemmvorrichtung (10) parallel zu einer der eine weitere Anlagefläche für das Anbaubauteil (29; 20a) bildenden nach Innen geneigten Profilwände (13b; 12b) des Profilrohrs (3a; 3b; 3c) angeordnet ist, wobei in dem Zwischenraum zwischen der Anlagefläche (18) der Haltenase (17) und der von der nach Innen geneigten Profilwand (13b; 12b) gebildeten Anlagefläche das Anbauteil (20; 20a) angeordnet ist und formschlüssig gehaltert ist.

2. Klemmvorrichtung nach Anspruch 1, **dadurch gekennzeichnet, dass** die Haltenase (17) einstückig an der Klemmvorrichtung (10) angeformt ist.

3. Klemmvorrichtung Anspruch 1 oder 2, **dadurch gekennzeichnet, dass** an der Haltenase (17) im Bereich der Anlagefläche (18) ein Weichbauteil angeordnet ist.

4. Klemmvorrichtung nach einem der Ansprüche 1 bis 3, **dadurch gekennzeichnet, dass** an der Haltenase (17) im Bereich der Anlagefläche (18) mindestens ein Haltenoppen oder ein Verzahnungsabschnitt ausgebildet ist.

5. Klemmvorrichtung nach einem der Ansprüche 1 bis 4, **dadurch gekennzeichnet, dass** Klemmvorrichtung (10) mit einer weiteren Haltenase zur weiteren Befestigung eines zweiten Anbauteils versehen ist.

6. Klemmvorrichtung nach einem der Ansprüche 1 bis 5, **dadurch gekennzeichnet, dass** die Klemmvorrichtung (10) von einem mehrteiligen, insbesondere zweiteiligen, Klemmstück (15) gebildet ist, das das Profilrohr (3a; 3b; 3c) zumindest teilweise umgreift und zwei hakenförmige Fortsätze (16a, 16b) zum jeweiligen Angreifen an einer der Profilwände (12a, 13a; 12b, 13b) des Profilrohres (3a; 3b; 3c) aufweist, wobei das Klemmstück (15) mittels einer Klemmeinrichtung an dem Profilrohr anklemmbar ist.

7. Klemmvorrichtung nach einem der Ansprüche 1 bis 5, **dadurch gekennzeichnet, dass** die Klemmvorrichtung (10) als einteiliges Klemmstück (15) ausgebildet ist, das das Profilrohr (3a; 3b; 3c) zumindest teilweise umgreift und zwei hakenförmige Fortsätze (16a, 16b) zum jeweiligen Angreifen an einer der Profilwände (12a, 13a; 12b, 13b) des Profilrohres (3a; 3b; 3c) aufweist, wobei das Klemmstück (15) zwischen den hakenförmigen Fortsätzen (16a, 16b) elastisch verformbar ist und das Klemmstück (15) mittels einer Spannvorrichtung (30) an dem Profilrohr anklemmbar ist.

8. Klemmvorrichtung nach Anspruch 7, **dadurch gekennzeichnet, dass** das Klemmstück (15) zwischen den hakenförmigen Fortsätzen (16a, 16b) mit einem Scharniergelenk (25) versehen ist.

9. Klemmvorrichtung nach Anspruch 8, **dadurch gekennzeichnet, dass** das Scharniergelenk (25) als Filmscharnier ausgebildet ist.

10. Klemmvorrichtung nach einem der Ansprüche 1 bis 9, **dadurch gekennzeichnet, dass** die Klemmvorrichtung (10) als Kunststoffbauteil ausgebildet ist.

11. Klemmvorrichtung nach einem der Ansprüche 7 bis 10, **dadurch gekennzeichnet, dass** das Klemmstück (15) einen an die Außenkontur, insbesondere einen konvexen Außenkonturbereich, des Profilrohrs (3a; 3b; 3c) angepasste Innenkontur aufweist, an der die hakenförmigen Fortsätze (16a, 16b) angeformt sind.

12. Klemmvorrichtung nach einem der Ansprüche 7 bis 11, **dadurch gekennzeichnet, dass** die Spannvorrichtung (30) ein Federelement (31c), insbesondere eine Federklammer, umfasst, das mit beiden hakenförmigen Fortsätzen (16a; 16b) des Klemmstücks (15) in Anlage steht und auf das Klemmstück (15) aufsteckbar ist.

13. Klemmvorrichtung nach einem der Ansprüche 7 bis 11, **dadurch gekennzeichnet, dass** die Spannvorrichtung (30) mindestens ein Federelement (31a; 31b), insbesondere ein Federblech, umfasst, das mit einem hakenförmigen Fortsatz (16a; 16b) des Klemmstücks (15) in Anlage steht und mittels eines Spannmittels (32) mit dem Klemmstück (15) verspannbar ist.

14. Klemmvorrichtung nach einem der Ansprüche 7 oder 11, **dadurch gekennzeichnet, dass** die Spannvorrichtung (30) zwei Federelemente (31a, 31b), insbesondere Federbleche, aufweist, wobei jedes Federelement (31a, 31b) mit einem Ende jeweils mit einem hakenförmigen Fortsatz (16a, 16b) des Klemmstücks (15) in Anlage steht und die beiden Federelemente (31a, 31b) mittels eines Spannmittels (32) gegeneinander verspannbar sind.

15. Klemmvorrichtung nach Anspruch 14, **dadurch gekennzeichnet, dass** die Federelemente (31a, 31b) im montierten Zustand mit zweiten Enden an einem Anlagepunkt (S) miteinander in Wirkverbindung stehen, wobei das Spannmittel (32) zwischen den beiden Enden der Federelemente (31a, 31b) angeordnet ist.

16. Klemmvorrichtung nach Anspruch 14 oder 15, **dadurch gekennzeichnet, dass** im angebauten Zustand ein erstes Federelement (31a) im Bereich eines ersten hakenförmigen Fortsatzes (16a) des Klemmstücks (15), der an einer ersten Profilwand (12a) des Profilrohres (3a; 3b; 3c) angreift, angeordnet ist und den ersten hakenförmigen Fortsatz (16a) gegen die erste Profilwand (12a) verspannt und ein zweites Federelement (31b) im Bereich eines zweiten hakenförmigen Fortsatzes (16b) des Klemmstücks (15), der an einer zweiten Profilwand (13a) des Profilrohres (3a; 3b; 3c) angreift, angeordnet ist und den zweiten hakenförmigen Fortsatz (16b) gegen die zweite Profilwand (13a) verspannt.

17. Klemmvorrichtung nach einem der Ansprüche 14 bis 16, **dadurch gekennzeichnet, dass** das Klemmstück (15) zwischen der Haltenase (17) und dem zweiten hakenförmigen Fortsatz (16b) mit einer Durchgangsöffnung (33) für das zweite Federelement (31b) versehen ist.

18. Klemmvorrichtung nach einem der Ansprüche 13 bis 17, **dadurch gekennzeichnet, dass** das Spannmittel (32) als Spannverschraubung ausgebildet ist.

19. Klemmvorrichtung nach einem der Ansprüche 1 bis 18, **dadurch gekennzeichnet, dass** die Klemmvorrichtung (10) mit einem Befestigungsadapter, insbesondere einer Gewindebohrung oder einem Halter, für ein weiteres Anbauteil versehen ist.

20. Klemmvorrichtung nach einem der Ansprüche 7 bis 19, **dadurch gekennzeichnet, dass** das Klemmstück (15) einen im Wesentlichen U-förmigen Querschnitt aufweist, wobei der Querschnitt einen Einbauraum (E) für die Spannvorrichtung (30) bildet.

21. Fahrzeug, insbesondere Flurförderzeug, mit einer Klemmvorrichtung nach einem der vorangegangenen Ansprüche, wobei mittels der Klemmvorrichtung (10) eine Scheibe (20) an dem Fahrerschutzdach (3) befestigt ist.

22. Fahrzeug, insbesondere Flurförderzeug, mit einer Klemmvorrichtung nach einem der Ansprüche 1 bis 20, wobei mittels der Klemmvorrichtung (10) ein Verkleidungsteil (20a), insbesondere eine Verdeckplane, an dem Fahrerschutzdach (3) befestigt ist.

## Claims

1. Clamping device (10) on a profiled tube (3a; 3b; 3c) of a driver's protective roof (3) of a vehicle (1) for fastening an add-on part, in particular a fairing part formed by a window (20) or a canopy-top tarpaulin (20a), wherein the profiled tube (3a; 3b; 3c) has a profile cross section (H) with two convex, outwardly curved circumferential walls (11a, 11b) and with two V-shaped undercuts (14a, 14b) facing inwards, wherein a first V-shaped undercut (14a) is formed by two profiled walls (12a, 12b) which are inclined inwards and in undercut form on the circumferential walls (11a, 11b), and a second undercut (14b) is formed by two profiled walls (13a, 13b) which are inclined inwards and in undercut form on the circumferential walls (11a, 11b), **characterized in that** the clamping device (10) is provided with a holding lug (17), by means of which the add-on part (20; 20a) is secured in a form-fitting manner on the profiled tube (3a; 3b; 3c), wherein the holding lug (17) is provided with a contact surface (18) for the add-on part (20; 20a), which contact surface, in the installed state of the clamping device (10), is arranged parallel to one of the inwardly inclined profiled walls (13b; 12b) of the profiled tube (3a; 3b; 3c), said profiled walls forming a further contact surface for the add-on part (29; 20a), wherein the add-on part (20; 20a) is arranged, and secured in a form-fitting manner, in the intermediate space between the contact surface (18) of the holding lug (17) and the contact surface formed by the inwardly inclined profiled wall (13b; 12b).

2. Clamping device according to Claim 1, **characterized in that** the holding lug (17) is moulded integrally on the clamping device (10).

3. Clamping device according to Claim 1 or 2, **characterized in that** a soft component is arranged on the holding lug (17) in the region of the contact surface (18).

4. Clamping device according to one of Claims 1 to 3, **characterized in that** at least one holding stud or a toothing portion is formed on the holding lug (17) in the region of the contact surface (18).

5. Clamping device according to one of Claims 1 to 4, **characterized in that** clamping device (10) is provided with a further holding lug for the further fastening of a second add-on part.

6. Clamping device according to one of Claims 1 to 5, **characterized in that** the clamping device (10) is formed by a multi-part, in particular two-part, clamping piece (15) which at least partially engages around the profiled tube (3a; 3b; 3c) and has two hook-shaped extensions (16a, 16b) for respectively acting on one of the profiled walls (12a, 13a; 12b, 13b) of the profiled tube (3a; 3b; 3c), wherein the clamping piece (15) can be clamped to the profiled tube by means of a clamping means.

7. Clamping device according to one of Claims 1 to 5, **characterized in that** the clamping device (10) is designed as a single-part clamping piece (15) which at least partially engages around the profiled tube (3a; 3b; 3c) and has two hook-shaped extensions (16a, 16b) for respectively acting on one of the profiled walls (12a, 13a; 12b, 13b) of the profiled tube (3a; 3b; 3c), wherein the clamping piece (15) is elastically deformable between the hook-shaped extensions (16a, 16b) and the clamping piece (15) can be clamped to the profiled tube by means of a tensioning device (30) .

8. Clamping device according to Claim 7, **characterized in that** the clamping piece (15) between the hook-shaped extensions (16a, 16b) is provided with a hinge joint (25).

9. Clamping device according to Claim 8, **characterized in that** the hinge joint (25) is configured as a film hinge.

10. Clamping device according to one of Claims 1 to 9, **characterized in that** the clamping device (10) is configured as a plastics component.

11. Clamping device according to one of Claims 7 to 10, **characterized in that** the clamping piece (15) has an inner contour which is adapted to the outer contour, in particular a convex outer contour region, of the profiled tube (3a; 3b; 3c) and on which the hook-shaped extensions (16a, 16b) are moulded.

12. Clamping device according to one of Claims 7 to 11, **characterized in that** the tensioning device (30) comprises a spring element (31c), in particular a spring clamp, which is in contact with the two hook-shaped extensions (16a; 16b) of the clamping piece (15) and can be plugged onto the clamping piece (15).

13. Clamping device according to one of Claims 7 to 11, **characterized in that** the tensioning device (30) comprises at least one spring element (31a; 31b), in particular a spring plate, which is in contact with a hook-shaped extension (16a; 16b) of the clamping piece (15) and can be braced against the clamping piece (15) by means of a tensioning means (32).

14. Clamping device according to either of Claims 7 and 11, **characterized in that** the tensioning device (30) has two spring elements (31a, 31b), in particular spring plates, wherein each spring element (31a, 31b) is in contact at one end in each case with a hook-shaped extension (16a, 16b) of the clamping piece (15) and the two spring elements (31a, 31b) can be braced against each other by means of tensioning means (32).

15. Clamping device according to Claim 14, **characterized in that**, in the mounted state, the spring elements (31a, 31b) are operatively connected at second ends to each other at a contact point (S), wherein the tensioning means (32) is arranged between the two ends of the spring elements (31a, 31b).

16. Clamping device according to Claim 14 or 15, **characterized in that**, in the mounted state, a first spring element (31a) is arranged in the region of a first hook-shaped extension (16a) of the clamping piece (15), which extension acts on a first profiled wall (12a) of the profiled tube (3a; 3b; 3c), and braces the first hook-shaped extension (16a) against the first profiled wall (12a), and a second spring element (31b) is arranged in the region of a second hook-shaped extension (16b) of the clamping piece (15), which extension acts on a second profiled wall (13a) of the profiled tube (3a; 3b; 3c), and braces the second hook-shaped extension (16b) against the second profiled wall (13a).

17. Clamping device according to one of Claims 14 to 16, **characterized in that** the clamping piece (15) between the holding lug (17) and the second hook-shaped extension (16b) is provided with a passage opening (33) for the second spring element (31b).

18. Clamping device according to one of Claims 13 to 17, **characterized in that** the tensioning means (32) is configured as a tensioning screw connection.

19. Clamping device according to one of Claims 1 to 18, **characterized in that** the clamping device (10) is provided with a fastening adapter, in particular a threaded bore or a holder, for a further add-on part.

20. Clamping device according to one of Claims 7 to 19, **characterized in that** the clamping piece (15) has a substantially U-shaped cross section, wherein the cross section forms an installation space (E) for the tensioning device (30).

21. Vehicle, in particular industrial truck, with a clamping device according to one of the preceding claims, wherein a window (20) is fastened to the driver's protective roof (3) by means of the clamping device (10).

22. Vehicle, in particular industrial truck, with a clamping device according to one of Claims 1 to 20, wherein a fairing part (20a), in particular a canopy-top tarpaulin, is fastened to the driver's protective roof (3) by means of the clamping device (10) .

## Revendications

1. Dispositif de serrage (10) sur un tube profilé (3a; 3b; 3c) d'un arceau de sécurité (3) d'un véhicule (1) pour la fixation d'un élément de montage, en particulier d'un élément d'habillage formé par une vitre (20) ou une bâche de capote (20a), dans lequel le tube profilé (3a; 3b; 3c) présente une section transversale de profil (H) avec deux parois périphériques convexes incurvées vers l'extérieur (11a, 11b) et avec deux contre-dépouilles en forme de V tournées vers l'intérieur (14a, 14b), dans lequel une première contre-dépouille en forme de V (14a) est formée de deux parois de profil (12a, 12b) en retrait sur les parois périphériques (11a, 11b) et inclinées vers l'intérieur et une deuxième contre-dépouille (14b) est formée de deux parois de profil (13a, 13b) en retrait sur les parois périphériques (11a, 11b) et inclinées vers l'intérieur, **caractérisé en ce que** le dispositif de serrage (10) est doté d'un ergot de retenue (17), au moyen duquel l'élément de montage (20; 20a) est maintenu par emboîtement sur le tube profilé (3a; 3b; 3c), dans lequel l'ergot de retenue (17) est doté d'une face d'appui (18) pour l'élément de montage (20; 20a), qui dans l'état monté du dispositif de serrage (10) est disposée parallèlement à une des parois de profil (13b; 12b) inclinées vers l'intérieur du tube profilé (3a; 3b; 3c) formant une autre face d'appui pour l'élément de montage (29; 20a), dans lequel l'élément de montage (20; 20a) est disposé et retenu par emboîtement dans l'espace intermédiaire entre la face d'appui (18) de l'ergot de retenue (17) et la face d'appui formée par la paroi de profil (13b; 12b) inclinée vers l'intérieur.

2. Dispositif de serrage selon la revendication 1, **caractérisé en ce que** l'ergot de retenue (17) est formé d'une seule pièce sur le dispositif de serrage (10).

3. Dispositif de serrage selon la revendication 1 ou 2, **caractérisé en ce qu'**un composant souple est disposé sur l'ergot de retenue (17) dans la région de la face d'appui (18).

4. Dispositif de serrage selon l'une quelconque des revendications 1 à 3, **caractérisé en ce qu'**au moins un bouton de retenue ou une partie de denture est formé(e) sur l'ergot de retenue (17) dans la région de la face d'appui (18).

5. Dispositif de serrage selon l'une quelconque des revendications 1 à 4, **caractérisé en ce que** le dispositif de serrage (10) est muni d'un autre ergot de retenue pour la fixation supplémentaire d'un deuxième élément de montage.

6. Dispositif de serrage selon l'une quelconque des revendications 1 à 5, **caractérisé en ce que** le dispositif de serrage (10) est formé par une pièce de serrage (15) en plusieurs parties, en particulier en deux parties, qui entoure au moins en partie le tube profilé (3a; 3b; 3c) et qui présente deux prolongements en forme de crochets (16a, 16b) pour s'accrocher respectivement à une des parois de profil (12a, 13a; 12b, 13b) du tube profilé (3a; 3b; 3c), dans lequel la pièce de serrage (15) peut être serrée sur le tube profilé au moyen d'un dispositif de serrage.

7. Dispositif de serrage selon l'une quelconque des revendications 1 à 5, **caractérisé en ce que** le dispositif de serrage (10) est formé par une pièce de serrage (15) en une seule partie, qui entoure au moins en partie le tube profilé (3a; 3b; 3c) et qui présente deux prolongements en forme de crochets (16a, 16b) pour s'accrocher respectivement à une des parois de profil (12a, 13a; 12b, 13b) du tube profilé (3a; 3b; 3c), dans lequel la pièce de serrage (15) est déformable élastiquement entre les prolongements en forme de crochets (16a, 16b) et la pièce de serrage (15) peut être serrée sur le tube profilé au moyen d'un dispositif de serrage (30).

8. Dispositif de serrage selon la revendication 7, **caractérisé en ce que** la pièce de serrage (15) est munie d'une articulation à charnière (25) entre les prolongements en forme de crochets (16a, 16b).

9. Dispositif de serrage selon la revendication 8, **caractérisé en ce que** l'articulation à charnière (25) est formée par une charnière pelliculaire.

10. Dispositif de serrage selon l'une quelconque des revendications 1 à 9, **caractérisé en ce que** le dispositif de serrage (10) est formé par un composant en matière plastique.

11. Dispositif de serrage selon l'une quelconque des revendications 7 à 10, **caractérisé en ce que** la pièce de serrage (15) présente un contour intérieur adapté au contour extérieur, en particulier à une région convexe du contour extérieur, du tube profilé (3a; 3b; 3c), sur lequel les prolongements en forme de crochets (16a, 16b) sont formés.

12. Dispositif de serrage selon l'une quelconque des revendications 7 à 11, **caractérisé en ce que** le dispositif de serrage (30) comprend un élément de ressort (31c), en particulier une agrafe élastique, qui est en appui avec les deux prolongements en forme de crochets (16a; 16b) de la pièce de serrage (15) et peut être engagé sur la pièce de serrage (15).

13. Dispositif de serrage selon l'une quelconque des revendications 7 à 11, **caractérisé en ce que** le dispositif de serrage (30) comprend au moins un élément de ressort (31a; 31b), en particulier une tôle élastique, qui est en appui avec un prolongement en forme de crochet (16a; 16b) de la pièce de serrage (15) et qui peut être serrée avec la pièce de serrage (15) au moyen d'un moyen de serrage (32).

14. Dispositif de serrage selon l'une quelconque des revendications 7 ou 11, **caractérisé en ce que** le dispositif de serrage (30) présente deux éléments de ressort (31a, 31b), en particulier des tôles élastiques, dans lequel chaque élément de ressort (31a, 31b) est en appui par une extrémité respectivement avec un prolongement en forme de crochet (16a, 16b) de la pièce de serrage (15) et les deux éléments de ressort (31a, 31b) peuvent être serrés l'un contre l'autre au moyen d'un moyen de serrage (32).

15. Dispositif de serrage selon la revendication 14, **caractérisé en ce que** les éléments de ressort (31a, 31b) sont dans l'état monté en liaison active l'un avec l'autre par des deuxièmes extrémités en un point d'appui (S), dans lequel le moyen de serrage (32) est disposé entre les deux extrémités des éléments de ressort (31a, 31b).

16. Dispositif de serrage selon la revendication 14 ou 15, **caractérisé en ce que** dans l'état monté un premier élément de ressort (31a) est disposé dans la région d'un premier prolongement en forme de crochet (16a) de la pièce de serrage (15), qui s'accroche à une première paroi de profil (12a) du tube profilé (3a; 3b; 3c) et serre le premier prolongement en forme de crochet (16a) contre la première paroi de profil (12a) et un deuxième élément de ressort (31b) est disposé dans la région d'un deuxième prolongement en forme de crochet (16b) de la pièce de serrage (15), qui s'accroche à une deuxième paroi de profil (13a) du tube profilé (3a; 3b; 3c), et serre le deuxième prolongement en forme de crochet (16b) contre la deuxième paroi de profil (13a).

17. Dispositif de serrage selon l'une quelconque des revendications 14 à 16, **caractérisé en ce que** la pièce de serrage (15) est munie entre l'ergot de retenue (17) et le deuxième prolongement en forme de crochet (16b) d'une ouverture de passage (33) pour le deuxième élément de ressort (31b).

18. Dispositif de serrage selon l'une quelconque des revendications 13 à 17, **caractérisé en ce que** le moyen de serrage (32) est réalisé par des vis de serrage.

19. Dispositif de serrage selon l'une quelconque des revendications 1 à 18, **caractérisé en ce que** le dispositif de serrage (10) est doté d'un adaptateur de fixation, en particulier un trou fileté ou un support, pour un autre élément de montage.

20. Dispositif de serrage selon l'une quelconque des revendications 7 à 19, **caractérisé en ce que** la pièce de serrage (15) présente une section transversale essentiellement en forme de U, dans lequel la section transversale forme une chambre de montage (E) pour le dispositif de serrage (30).

21. Véhicule, en particulier chariot de manutention, avec un dispositif de serrage selon l'une quelconque des revendications précédentes, dans lequel une vitre (20) est fixée à l'arceau de sécurité (3) au moyen du dispositif de serrage (10).

22. Véhicule, en particulier chariot de manutention avec un dispositif de serrage selon l'une quelconque des revendications 1 à 20, dans lequel une pièce d'habillage (20a), en particulier une bâche de capote, est fixée à l'arceau de sécurité (3) au moyen du dispositif de serrage (10).
